# EUROPEAN PATENT SPECIFICATION

(11) **EP 1 792 768 B1**
(45) Date of publication and mention of the grant of the patent: **12.08.2009**
(21) Application number: 05026464.7
(22) Date of filing: 05.12.2005
(51) Int. Cl.: B60K 35/00

(54) **Vehicle based information reproduction system and method of using**
In einem Fahrzeug angeordnetes Informationswiedergabesystem und Verfahren zu seiner Nutzung
Système de reproduction d'information embarqué dans un véhicule et procédé pour son utilisation

(43) Date of publication of application: 06.06.2007
(73) Proprietor: Johnson Controls Automotive Electronics GmbH, 75196 Remchingen (DE)
(72) Inventor: Tuzsuzov, Jordan, Sofia 1614 (BG)
(74) Representative: Wolff, Felix

(56) References cited:
- DE-A1- 10 230 228
- DE-A1- 19 854 133
- US-A1- 2004 227 624

## Description

The present invention refers to a vehicle based information reproduction system, comprising a control means and a memory means, wherein an information reproduction means and a data input interface is assigned to the information reproduction system.

Such information reproduction systems to be applied inside or in connection with vehicles are generally known. For example German patent application DE 4213129 A1 discloses a driver information system with a monitor inside a vehicle, wherein the reproduction of TV-Entertainment on the monitor is disclosed. This has the disadvantage, that data to be reproduced for a passenger or a driver of the vehicle have to be received in parallel to the reproduction of the displayed data. Furthermore, the components needed in order to display video information or in order to reproduce acoustic or audio information are of comparably high complexity, thus involving comparably expensive components in such a known driver system information.

An information reproduction system including the features of the preamble of claim 1 is known from US-A-2004227624.

It is therefore an object of the present invention to provide a vehicle based information reproduction system which is comparably cheap and suited to the information needs of the users of the vehicle i. e. the driver and or passengers.

The problem is solved by a vehicle based information reproduction system, comprising a control means and a memory means, wherein an information reproduction means and a data input interface is assigned to the information reproduction system, wherein textual information stored in the memory means is reproduced on the information reproduction means on demand by a user of the vehicle. This has the advantage, that only comparably small amounts of information or data (i. e. a small data volumes) are needed to be transferred towards the information reproduction system. This allows for the use of relatively low cost components for the realisation of the inventive information reproduction system.

According to the present invention the text to all information is a text only information in a form to a compatible RSS feed (really simple syndication/rich site summary). This allows for a very effective information transmission for information purposes of the users of a vehicle. This further allows of being informed very quickly and very easily without the need of normal web-surfing equipment and without the need for high information throughput to be realised with the inventive information reproduction system. For example, a RSS/Atom feed of 16 kB corresponds to about 8 minutes of reading (of course dependent on the velocity of reading). For the purpose of a comparison, an audio-file of the same length in time (about 8 minutes) would have a data volume of at least 10 to 100 time as much even with the highest degree of compression available. A video-file would even require a higher data volume than 10 to 100 fold increase of the volume of 16 kB.

According to the present invention it is further preferred, that the input interface comprises a communication interface to a wireless telecommunication network. This can be a mobile telephone telecommunication network suitable for the transmission of data, or a wireless data communication network like WiFi, W-LAN or another network structure. According to the present invention it is very much advantageous, that, due to the small amount data to be transferred and stored and treated, the connection time of the inventive information reproduction system to the telecommunication network is rather small. This means, that in a rather short time period of for example a fraction of a second up to several seconds or several tens of seconds, all the data can be transferred for the information needs of a relatively long time of information consumption by the user of the information reproduction system. For example, even with GSM mobile telecommunication network connection (Global System for mobile telecommunication) with a data throughput of 9,6 kBd, the data volume of 16 KB could be transferred within e. g. 10 to 20 seconds for a reading time of for example 8 minutes.

According to the present invention, it is furthermore preferred that the input interface comprises a storage interface to a mass storage means. This provides for the possibility to feed the information reproduction system by means of static memory devices like memory cards or compact disks or other memory carriers. It is thereby possible to quickly load the amount of information needed for being performed or reproduced by the information reproduction system towards a memory card or memory stick, e. g. by downloading appropriate files from a stationary internet source. Afterwards the loaded memory device can be linked to the storage interface comprised by the information reproduction system according to the present invention or assigned to the information reproduction system according to the present invention. Thereby, the memory stick or memory device acts a mass storage means.

According to the present invention, it is furthermore preferred, that the information reproduction means comprises a display means for an optical or visual reproduction of the textual information and/or that the information reproduction means comprises an acoustic reproduction means for an acoustical reproduction of the textual information. This allows for any kind of optical, visual, acoustical or haptical reproduction of the textual information dependent on the needs of the users of the vehicle. For example, a driver can reproduce the textual information in an acoustical form. Therefore, a text to speach translator or text to speach device is used such that a driver of the vehicle can hear the textual information even while driving (like listening to the radio). A passenger (not driving the vehicle) could for example read the textual information on a monitor or display device.

It if furthermore preferred, that a human-machine interface (HMI) is assigned to the information reproduction system for providing control information of the user to the information reproduction system. Thereby, it is advantageously possible for the user to control the inventive information reproduction system. This can either be done by buttons or touch screen elements or other haptic control elements either on a human-machine interface central to the vehicle or provided near or integrated to the information reproduction means according to the information reproduction system of the present invention.

It is furthermore preferred according tot he present invention, that the reproduction of the textual information differs dependent on whether the vehicle is driven or not and/or it is preferred that the reproduction of the textual information differs dependent on whether the reproduction of the textual information is directed to a driver of the vehicle or to a passenger of the vehicle. This greatly enhances the safety of the passengers and the driver of the vehicle because it is e. g. forbidden according to the present invention that the textual information is displayed to the driver in visual form while driving the vehicle.

Another aspect of the present invention is a method of using an information reproduction system according to the present invention, wherein the textual information in the memory means is updated periodically by data transfer via the input interface. Thereby, it is possible, that only the newest or latest version of the textual information is reproduced to the user of the information reproduction system.

It is furthermore preferred according to the present invention that in first step, data comprising the textual information are transferred via the input interface to the memory means, and that in a second step, this textual information is reproduced by the information reproduction means. This allows for the possibility to separate the reception time of the textual information by the telecommunication network and the performing time or reproduction time of the textual information with the inventive information reproduction system. Thereby, the present invention allows for an stable and robust behaviour of the present information reproduction system even if only comparably low data transfer rate is available (for example only GSM data modus). This further allows for a robust behaviour of the present invention even in cases of for reception conditions, e. g. in tunnels or in cities.

These and other characteristics, features and advantages of the present invention will become apparent from the following detailed description, taking into conjunction with the accompanying drawings, which illustrate, by way of example, the principals of the present invention. The description is given for the sake of example only, without limiting the scope of the invention. The reference figures quoted below refer to the attached drawings.
- **Figure 1**: illustrates a vehicle with an inventive information reproduction system,
- **Figure 2**: illustrates schematically an information reproduction system according to the present invention.

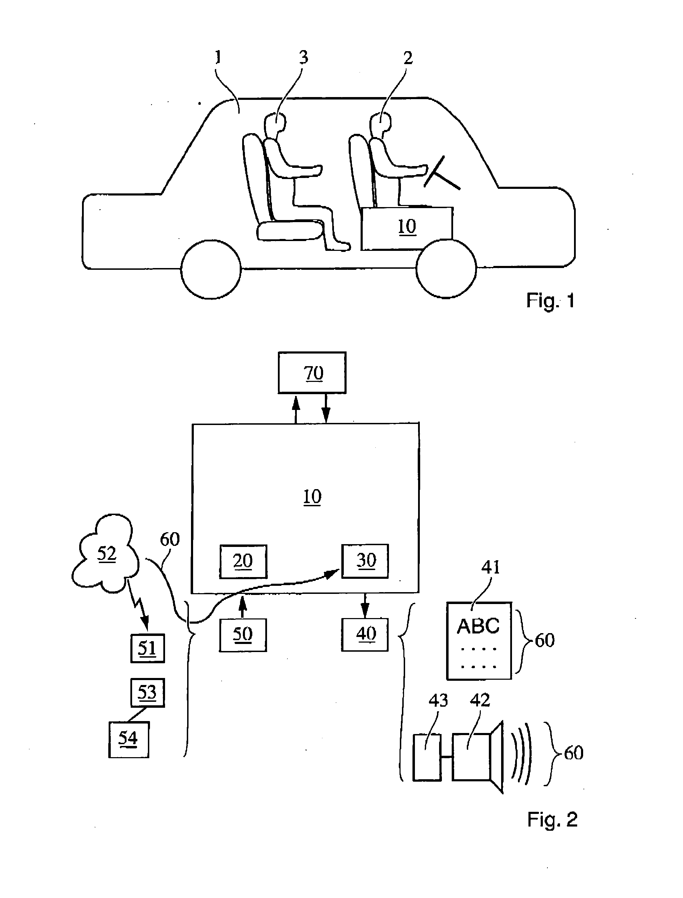

In **figure 1**, a vehicle 1 is provided with an inventive information reproduction system 10. The vehicle 1 is used in the example of **figure 1** by two user 2, 3 where a first user 2 is hereinafter also called the driver 2 and a second user 3 which is hereinafter also called a passenger 3.

In **figure 2**, the information reproduction system 10 according to the present invention is schematically shown. The information reproduction system 10 comprises a control means 20, which is generally realised by means of a micro-controller or a CPU component. The information reproduction system 10 further comprises a memory means 30, for example a integrated circuit memory like a flash memory or a RAM memory or a different kind of memory device. A human machine interface 70 is assigned to the information reproduction system 10. The human-machine interface 70 can also be comprised by the information reproduction system 10. The human-machine interface 70 is used to input control information into the information reproduction system 10. A data input interface 50 is also assigned to the information reproduction system 10. In another embodiment of the present invention, the information reproduction system 10 comprises the data input interface 50. The data input interface 50 can be provided e. g. as a communication interface 51 to a wireless telecommunication network 52 and/or in the form of a storage interface 53 to a mass storage means 54. The telecommunication network 52 and/or the mass storage means 54 act in this case as a data source for providing a textual information 60 which can be stored inside the memory means 30 of the information reproduction system 10. The textual information 60 is schematically shown by means of an arrow. The wireless telecommunication network 52 can either be realised in the form of a mobile telecommunication network or a data network or another wireless network. A information reproduction means 40 is also assigned to the information reproduction system 10 or the information reproduction system 10 comprises the information reproduction means 40. The information reproduction means comprises GA display means 41 for an optical visual reproduction of the textual information 60 and/or an acoustic reproduction means for an acoustical reproduction of the textual information 60. In the case of an acoustical reproduction of the textual information 60 an text to speach converter 43 has to used providing for an artificial reading voice of the textual information 60 to be reproduced acoustically.

## Claims

1. Vehicle (1) based information reproduction system (10), comprising a control means (20) and a memory means (30), wherein an information reproduction means (40) and a data input interface (50) is assigned to the information reproduction system (10), wherein textual information (60) stored in the memory means (30) is reproduced on the information reproduction means (40) on demand by a user (2, 3) of the vehicle (1) **characterised in that** the textual information (60) is a text-only information in a form compatible to a RSS feed (really simple syndication/rich site summary).

2. Information reproduction system (10) according to claim 1, **characterised in that** the data input interface (50) comprises a communication interface (51) to a wireless telecommunication network (52).

3. Information reproduction system (10) according to anyone of the preceding claims, **characterised in that** the data input interface (50) comprises a storage interface (53) to a mass storage means (54).

4. Information reproduction system (10) according to anyone of the preceding claims, **characterised in that** the information reproduction means (40) comprises a display means (41) for an optical or visual reproduction of the textual information (60) and/or that the information reproduction means (40) comprises an acoustic reproduction means (42) for an acoustical reproduction of the textual information (60).

5. Information reproduction system (10) according to anyone of the preceding claims, **characterised in that** a human-machine interface (HMI) (70) is assigned to the information reproduction system (10) for providing control information of the user (2, 3) to the information reproduction system (10).

6. Information reproduction system (10) according to anyone of the preceding claims, **characterised in that** the reproduction of the textual information (60) differs dependent on whether the vehicle (1) is driven or not and/or that the reproduction of the textual information (60) differs dependent on whether the reproduction of the textual information (60) is directed to a driver (2) of the vehicle (1) or to a passenger (3) of the vehicle (1).

7. Method of using an information reproduction system (10) according to anyone of the preceding claims, **characterised in that** the textual information (60) in the memory means (30) is updated periodically by data transferred via the data input interface (50).

8. Method according to claim 7 or method of using an information reproduction system (10) according to anyone of claims 1 to 6, **characterised in that**
- in a first step, data comprising the textual information (60) are transferred via the input interface (50) to the memory means (30),
- in a second step, the textual information (60) is reproduced by the information reproduction means (40).

## Patentansprüche

1. Informationswiedergabesystem (10) in einem Fahrzeug (1), das ein Steuermittel (20) und ein Speichermittel (30) enthält, wobei dem Informationswiedergabesystem (10) ein Informationswiedergabemittel (40) und eine Dateneingabeschnittstelle (50) zugeordnet sind, wobei auf Anforderung durch einen Anwender (2, 3) des Fahrzeugs (1) auf dem Informationswiedergabemittel (40) Textinformationen (60), die in dem Speichermittel (30) gespeichert sind, wiedergegeben werden, **dadurch gekennzeichnet, dass** die Textinformationen (60) Nur-TextInformationen eine Form haben, die mit einem RSS-Feed (really simple syndication/rich site summary) kompatibel ist.

2. Informationswiedergabesystem (10) nach Anspruch 1, **dadurch gekennzeichnet, dass** die Dateneingabeschnittstelle (50) eine Kommunikationsschnittstelle (51) mit einem drahtlosen Telekommunikationsnetz (52) enthält.

3. Informationswiedergabesystem (10) nach einem der vorhergehenden Ansprüche, **dadurch gekennzeichnet, dass** die Dateneingabeschnittstelle (50) eine Speicherschnittstelle (53) zu einem Massenspeichermittel (54) enthält.

4. Informationswiedergabesystem (10) nach einem der vorhergehenden Ansprüche, **dadurch gekennzeichnet, dass** das Informationswiedergabemittel ein Anzeigemittel (41) für eine optische oder visuelle Wiedergabe der Textinformationen (60) enthält und/oder dass das Informationswiedergabemittel (40) ein akustisches Wiedergabemittel (42) für eine akustische Wiedergabe der Textinformationen (60) enthält.

5. Informationswiedergabesystem (10) nach einem der vorhergehenden Ansprüche, **dadurch gekennzeichnet, dass** dem Informationswiedergabesystem (10) eine Mensch-Maschine-Schnittstelle (HMI) (70) zugeordnet ist, um Steuerinformationen des Anwenders (2, 3) für das Informationswiedergabesystem (10) bereitzustellen.

6. Informationswiedergabesystem (10) nach einem der vorhergehenden Ansprüche, **dadurch gekennzeichnet, dass** sich die Wiedergabe der Textinformationen (60) in Abhängigkeit davon unterscheidet, ob das Fahrzeug (1) gefahren wird oder nicht, und/oder dass sich die Wiedergabe der Textinformationen (60) in Abhängigkeit davon unterscheidet, ob die Wiedergabe der Textinformationen (60) an den Fahrer (2) des Fahrzeugs (1) oder an einen Fahrgast (3) des Fahrzeugs (1) gerichtet ist.

7. Verfahren zum Verwenden eines Informationswiedergabesystems (10) nach einem der vorhergehenden Ansprüche, **dadurch gekennzeichnet, dass** die Textinformationen (60) in den Speichermitteln (30) durch Daten, die über die Dateneingabeschnittstelle (50) übertragen werden, periodisch aktualisiert werden.

8. Verfahren nach Anspruch 7 oder Verfahren zum Verwenden eines Informationswiedergabesystems (10) nach einem der Ansprüche 1 bis 6, **dadurch gekennzeichnet, dass**
- in einem ersten Schritt Daten, die Textinformationen (60) enthalten, über die Eingabeschnittstelle (50) zu dem Speichermittel (30) übertragen werden, und
- in einem zweiten Schritt die Textinformationen (60) durch das Informationswiedergabemittel (40) wiedergegeben werden.

## Revendications

1. Système (10) de reproduction d'information embarqué dans un véhicule (1), comprenant un moyen (20) de commande et un moyen (30) à mémoire, dans lequel un moyen (40) de reproduction d'information et une interface (50) d'entrée de données sont affectés au système (10) de reproduction d'information, dans lequel une information textuelle (60) stockée dans le moyen (30) à mémoire est reproduite sur le moyen (40) de reproduction d'information lors d'une demande émanant d'un utilisateur (2, 3) du véhicule (1), **caractérisé en ce que** l'information textuelle (60) est une information ne comprenant que du texte sous une forme compatible avec un flux RSS (syndication de contenu RSS/sommaire de site enrichi).

2. Système (10) de reproduction d'information selon la revendication 1, **caractérisé en ce que** l'interface (50) d'entrée de données comprend une interface de communication (51) avec un réseau (52) de télécommunication sans fil.

3. Système (10) de reproduction d'information selon l'une quelconque des revendications précédentes, **caractérisé en ce que** l'interface (50) d'entrée de données comprend une interface de stockage (53) avec un moyen (54) à mémoire de masse.

4. Système (10) de reproduction d'information selon l'une quelconque des revendications précédentes, **caractérisé en ce que** le moyen (40) de reproduction d'information comprend un moyen d'affichage (41) destiné à la reproduction optique ou visuelle de l'information textuelle (60) et/ou **en ce que** le moyen (40) de reproduction d'information comprend un moyen (42) de reproduction acoustique destiné à la reproduction acoustique de l'information textuelle (60).

5. Système (10) de reproduction d'information selon l'une quelconque des revendications précédentes, **caractérisé en ce qu'**une interface homme-machine (IHM) (70) est affectée au système (10) de reproduction d'information pour fournir des informations de commande de l'utilisateur (2, 3) au système (10) de reproduction d'information.

6. Système (10) de reproduction d'information selon l'une quelconque des revendications précédentes, **caractérisé en ce que** la reproduction de l'information textuelle (60) diffère selon que le véhicule (1) est conduit ou non et/ou **en ce que** la reproduction de l'information textuelle (60) diffère selon que la reproduction de l'information textuelle (60) est destinée à un conducteur (2) du véhicule (1) ou à un passager (3) du véhicule (1).

7. Procédé d'utilisation d'un système (10) de reproduction d'information selon l'une quelconque des revendications précédentes, **caractérisé en ce que** l'information textuelle (60) contenue dans le moyen (30) à mémoire est mise à jour périodiquement par des données transférées par l'intermédiaire de l'interface (50) d'entrée de données.

8. Procédé selon la revendication 7 ou procédé d'utilisation d'un système (10) de reproduction d'information selon l'une quelconque des revendications 1 à 6, **caractérisé en ce que** :
- lors d'une première étape, des données comprenant l'information textuelle (60) sont transférées par l'intermédiaire de l'interface (50) d'entrée au moyen (30) à mémoire,
- lors d'une deuxième étape, l'information textuelle (60) est reproduite par le moyen (40) de reproduction d'information.
